Europäisches Patentamt

European Patent Office

Office européen des brevets

(11) Publication number: **0 563 593 B1**

# EUROPEAN PATENT SPECIFICATION

(45) Date of publication of patent specification: **27.12.95**

(51) Int. Cl.6: **A23L 1/19**, A23C 13/12, A23D 7/00

(21) Application number: **93103294.0**

(22) Date of filing: **02.03.93**

(54) Oil-in-water type emulsion for whipped cream, powder and whipped cream

(30) Priority: **02.03.92 JP 81723/92**

(43) Date of publication of application:
**06.10.93 Bulletin 93/40**

(45) Publication of the grant of the patent:
**27.12.95 Bulletin 95/52**

(84) Designated Contracting States:
**DE FR GB NL SE**

(56) References cited:
**DE-A- 2 922 317**

**DATABASE WPI, Derwent Publications Ltd.,
London, GB; DATABASE WPI, accession no.
70-36113r, week 7020;& JP-B-45014108
(T.KURIYAMA)**

**PATENT ABSTRACTS OF JAPAN, vol. 5, no.
114 (C-64), 23 July 1981; & JP - A - 56051964
(MINAMINIHON RAKUNOU KYODO K.K.)
09.05.1981**

(73) Proprietor: **KAO CORPORATION
14-10, Nihonbashi,
Kayabacho 1-chome
Chuo-ku,
Tokyo (JP)**

(72) Inventor: **Irinatsu, Yuichi
8752-23, Doaihoncho 1-chome,
Hasaki-machi
Kashima-gun,
Ibaraki (JP)**
Inventor: **Uchikoshi, Masanobu
8752-23, Doaihoncho 1-chome,
Hasaki-machi
Kashima-gun,
Ibaraki (JP)**
Inventor: **Ohmura, Hisao
8752-23, Doaihoncho 1-chome,
Hasaki-machi
Kashima-gun,
Ibaraki (JP)**

PATENT ABSTRACTS OF JAPAN, vol. 13, no. 79 (C-571), 22 February 1989; & JP - A - 63267250 (SNOW BRAND MILK PROD CO LTD) 04.11. 1988

DATABASE WPIL, Derwent Publications Ltd., London, GB; DATABASE WPIL, accession no. 83-738605, week 8333; & JP - A - 58116647 (MEIJI MILK PROD. K.K.) 11.07.1983

PATENT ABSTRACTS OF JAPAN, vol. 13, no. 115 (C-578), 20 March 1989; & JP - A - 63291550 (FUJI OIL CO LTD) 29.11.1988

(74) Representative: **Hansen, Bernd, Dr. Dipl.-Chem. et al Hoffmann, Eitle & Partner Patent- und Rechtsanwälte, Postfach 81 04 20 D-81904 München (DE)**

## Description

FIELD OF THE INVENTION

This invention relates to an oil-in-water type emulsion (an oil-in-water type emulsified fats and oils composition) for whipped cream, which is usable in topping, filling and sandwiching in cakes, desserts and breads, a powder of the emulsion and a whipped cream prepared by whipping the emulsion.

BACKGROUND OF THE INVENTION

In the fields of confectionery and bakery, there have been employed compound creams containing from 25 to 55 % by weight of fats and oils (e.g., vegetable fats and oils, and fresh cream or milk fat), entirely vegetable filled creams (comprising nonfat milk solid components and pure vegetable fats and oils) as oil-in-water type emulsions for topping and filling. Compared with natural fresh cream, these products are less expensive and easily available. Further, their qualities are relatively constant, which makes them easily handled. Accordingly, these products have been commonly used, in particular, in the confectionery and bakery industries where they are produced, distributed and consumed on a large scale.

In general, such a oil-in-water type emulsion is produced by processing a mixture comprising fats and oils, non-fat milk solid components such as skim milk, and emulsifiers in several steps of, for example, pre-emulsification, high-pressure homogenization, pasteurization and cooling. It is desirable that these products have the following characteristics.

(1) An oil-in-water type emulsion is neither thickened nor solidified due to common environmental changes encountering in storage, transportation and usage (i.e., having a high emulsion stability).

(2) When an oil-in-water type emulsion is whipped and used as a whipped cream, the whipping time for achieving the optimum whipped condition is constant, the end point of whipping has an appropriate flexibility, the over-run (foaming properties) is constant and the obtained whipped cream is excellent in shaping and forming properties and thus cake decoration can be easily performed (i.e., having excellent whipping properties).

(3) When filled, topped or sandwiched in, for example, cakes or bread, the above-mentioned whipped cream has a good shape retention so as to maintain the cream texture, never suffers from separation of water with the lapse of time (i.e., having a high water-separation resistance) and maintains the smoothness and gloss of the surface (i.e., having a good appearance).

(4) It is easily melted in the mouth and has a good flavor and texture without any undesirable taste.

Attempts have been made to obtain a cream of excellent qualities and having such good properties as described above by examining production processes and compositions of raw materials. Regarding the composition of raw materials, for example, there have been attempted to select various emulsifiers as disclosed in JP-A-63-267250 and JP-A-3-62387 (the term "JP-A" as used herein means an "unexamined published Japanese patent application), to add natural or synthetic thickeners, and to modify or denature milk proteins. However, the use of the above-mentioned additives in a large amount seriously deteriorates the flavor and texture which are the most basic characteristics of the products. Therefore the use of these additives should be restricted from a practical viewpoint. It has been also attempted to improve, for example, the texture of fats contained in an oil-in-water type emulsion per se, as disclosed in JP-A-63-291550.

SUMMARY OF THE INVENTION

The present invention aims at providing an oil-in-water type emulsion, which has most of the above-mentioned properties required for an oil-in-water type emulsion and whipped cream, a powder thereof and a whipped cream prepared by whipping the same.

In order to develop such an oil-in-water type emulsion of excellent qualities as described above, the present inventors have examined fats and oils components constituting an oil-in-water type emulsion. As a result, they have successfully found out that the above object can be achieved by using a specific mixed fatty acid triglyceride containing long-chain fatty acids as constituting fatty acids, as one of various triglycerides contained in fat components, thus completing the present invention.

Accordingly, the present invention provides an oil-in-water type emulsion for whipped cream comprising fats and oils, an emulsifier and a milk protein, wherein the fats and oils contain from 5 to 70 % by weight of a mixed fatty acid triglyceride containing at least one saturated fatty acid residue with 20 to 24 carbon atoms and at least one unsaturated fatty acid residue with 18 carbon atoms per molecule as constituting fatty acids.

The present invention further provides an oil-in-water type emulsion for whipped cream comprising fats, an emulsifier, a sugar and a milk protein, wherein the fats and oils contain from 5 to 70 % by weight of a mixed fatty acid triglyceride containing at least one saturated fatty acid residue with 20 to 24 carbon atoms and at least one unsaturated fatty acid residue with 18 carbon atoms per molecule as constituting fatty acids.

Furthermore, the present invention provides a powder (a granular or powdery cream) prepared by drying the above-mentioned oil-in-water type emulsion for whipped cream.

Furthermore, the present invention provides a whipped cream prepared by whipping the above-mentioned oil-in-water type emulsion for whipped cream.

DETAILED DESCRIPTION OF THE INVENTION

A preferred embodiment of the present invention is as follows.

(1) The above-mentioned saturated fatty acid with 20 to 24 carbon atoms is arachic acid or behenic acid.

(2) The above-mentioned unsaturated fatty acid with 18 carbon atoms is oleic acid, linoleic acid or linolenic acid.

(3) the above-mentioned mixed fatty acid triglyceride is contained in the fats and oils composition in an amount of 10 to 50 % by weight.

(4) As the above-mentioned emulsifier, lecithin, a monoglyceride and a sucrose fatty acid ester are contained.

Now, the oil-in-water type emulsion for whipped cream according to the present invention will be described in detail.

The oil-in-water type emulsion for whipped cream of the present invention is characterized in that a mixed fatty acid triglyceride of a specific composition, as will be described hereinafter, is contained in the fats and oils component of the emulsion.

The mixed fatty acid triglyceride according to the present invention contains at least one saturated fatty acid residue with 20 to 24 carbon atoms and at least one unsaturated fatty acid residue with 18 carbon atoms per molecule as constituting fatty acids. As preferable examples of the saturated fatty acid with 20 to 24 carbon atoms, arachic acid and behenic acid may be cited and behenic acid is more preferable. As preferable examples of the unsaturated fatty acid with 18 carbon atoms, oleic acid, linoleic acid and linolenic acid may be cited.

Specific examples of the above-mentioned mixed fatty acid triglyceride include glycerol monobeheno-dioleate, glycerol monobeheno-dilinoleate, glycerol monobeheno-oleolinoleate, glycerol dibeheno-monolinoleate, glycerol dibeheno-monooleate. Some portion of the saturated fatty acids may be replaced with palmitic acid, stearic acid or arachic acid and a mixture thereof. The binding positions of the unsaturated fatty acid(s) with 18 carbon atoms may be either at the $\alpha$- or $\beta$-position and a mixture thereof may be used.

The method for producing the mixed fatty acid triglyceride according to the present invention is not particularly restricted. For example, it may be produced by the following method.

The mixed fatty acid triglyceride according to the present invention can be obtained by preparing a mixed oil comprising a first fatty acid triglyceride containing 30 % by weight or more of saturated fatty acid(s) with 20 to 24 carbon atoms, which comprises behenic acid triglyceride or extra-hydrogenated erucic rapeseed oil, optionally blended with other fats and oils, and a second fatty acid triglyceride containing 60 % by weight or more of unsaturated fatty acid(s) with 18 carbon atoms, which comprises oleic acid triglyceride, linolenic acid triglyceride or a vegetable oil containing oleic acid residue or linoleic acid residue (for example, soybean oil, olive oil, rapeseed oil, safflower oil) optionally blended with other fats and oils; and then subjecting the resulting mixed oil to an ester exchange reaction and/or fractionation.

The ester exchange can be performed, for example, by rearranging fatty acids at random with the use of an alkali catalyst or selectively ester-exchanging the $\alpha$-position by using an enzyme catalyst such as lipase. Further, it is effective to fractionate the ester-exchanged oil thus obtained by using a solvent such as acetone or n-hexane to thereby concentrate the mixed fatty acid triglyceride.

In the oil-in-water type emulsion for whipped cream of the present invention, the above-mentioned mixed fatty acid triglyceride is contained together with other fats and oils so as to form an oily phase. Examples of the fats and oils include vegetable fats and oils such as rapeseed oil, corn oil, sunflower oil, safflower oil, cottonseed oil, soybean oil, rice bran oil, palm oil, palm kernel oil, coconut oil and hydrogenated products thereof and fats and oils comprising milk fat as the main component. The above-mentioned mixed fatty acid triglyceride is contained in the oily phase at a ratio of from 5 to 70 % by weight based on the total amount of fats and oils, preferably from 10 to 50 % by weight. When the content of the mixed fatty acid triglyceride is smaller than the lower limit as specified above, no remarkable effect is observed on the shape retention or water-separation resistance of the product. When this content exceeds the upper limit, on the other hand, the melting of the product in the mouth tends to be deteriorated.

The oil-in-water type emulsion for whipped cream of the present invention can be produced by a conventionally known method. Namely, fats and oils containing the above-mentioned mixed fatty acid triglyceride (an oily liquid) and an aqueous liquid containing a milk protein or an aqueous liquid containing a sugar and a milk protein are mixed and emulsified (a pre-emulsification step). Next, the obtained emulsion is processed in conventional steps (homogenization, pasteurization, cooling and aging). The above-mentioned fats and oils (the fats and oils constituting the oily phase) are blended in an amount of from 20 to 60 % by weight (preferably from 25 to 55 % by weight) based on the emulsion.

The above-mentioned milk protein is obtained from, for example, cow's milk, concentrated milk, skim milk, skim milk powder, whole-fat milk powder or whey powder and blended generally in an amount of from 0.5 to 10 % by weight, in terms of a solid milk protein, based on the total emulsion.

Examples of the above-mentioned sugar include sucrose, glucose, fructose, liquid sugars, lactose, maltose and starch syrup. In general, one or more of these sugars are contained in the oil-in-water type emulsion of the present invention in an amount of from 5 to 20 % by weight or around thereof based on the total emulsion. In the preparation of an oil-in-water type emulsion for whipped cream, an aqueous solution containing the milk protein is usually employed and the sugar are frequently added together with other additives to the emulsion at the whipping step. However, the oil-in-water type emulsion for whipped cream may contain the sugar together with the milk protein.

In the preparation of the above-mentioned emulsion, known emulsifiers may be used. Examples of the emulsifiers include lecithin, glycerol fatty acid esters, propylene glycol fatty acid esters, sorbitan fatty acid esters, polyglycerol fatty acid esters and sucrose fatty acid esters. From among these emulsifiers, lipophilic ones and hydrophilic ones may be selected and used in a combination of them. In the present invention, it is particularly preferable to use a combination of lecithin, a monoglyceride and a sucrose fatty acid ester. It is preferable to use either one or two or more of these emulsifiers in a total amount of from 0.1 to 2.5 % by weight based on the total emulsion.

The emulsion of the present invention may further contain known additives such as stabilizers and flavors. These additives may be added, similar to the above-mentioned case, in such a manner that lipophilic ones are added to the oily solution while hydrophilic ones are added to the aqueous solution.

In the above-mentioned production process, the pre-emulsification is performed at a temperature of about 65 to 70°C for about 15 minutes. The homogenization is performed by using a homogenizer usually under a pressure of from 15 to 100 bar (kg/cm$^2$). The homogenization may be effected again after the completion of the pasteurization (re-homogenization). After the completion of the pasteurization, the emulsion was quickly cooled to 5 to 10°C and aged for additional 15 hours or longer to thereby give the oil-in-water type emulsion for whipped cream according to the present invention. The oil-in-water type emulsion of the present invention thus obtained has a relatively low viscosity (30 to 300 mPa•s (cp)) and a high emulsion stability against its external environment.

The oil-in-water type emulsion for whipped cream of the present invention thus obtained may be formulated into a powder, e.g., granular product, a powdery product or a powdery cream, by drying. The formulation into a powder can be performed by combining conventionally known techniques such as spray drying, vacuum drying and grinding.

The whipped cream according to the present invention can be prepared by aging the above-mentioned oil-in-water type emulsion at a low temperature and then whipping it by using, for example, a mixer. In the whipping step, additives such as flavors may be added, if necessary. Further, an aqueous sugar solution may be added thereto, as described above. A whipped cream may be prepared from the above-mentioned powder by adding the powder to an aqueous sugar solution and then treating it in the same manner as the one described above.

The oil-in-water type emulsion for whipped cream according to the present invention is usable in the fields of confectionery and bakery for topping, filling and sandwiching.

To further illustrate the present invention in greater detail, the following Examples and Comparative Examples will be given. However, it is to be understood that the present invention is never restricted thereto. In these Examples, all percents means % by weight unless otherwise specified.

5

Preparation of Samples

Sample 1:

(Preparation of mixed fatty acid triglyceride (TG1))

A mixed oil comprising 50 % of behenic acid triglyceride (fatty acid composition = stearic acid: 1.8 %; arachic acid: 10.1 %; behenic acid: 85.8 %) and 50 % of olive oil (fatty acid composition = palmitic acid: 10.6 %; stearic acid: 3.2 %; oleic acid: 81.2 %; linoleic acid: 5.4 %) was subjected to a reaction at 80°C in the presence of 0.1 % of sodium methylate as a catalyst for 30 minutes, thus an ester-exchanged oil was obtained. This ester-exchanged oil was dissolved in 4 ml of n-hexane per gram of the oil and cooled under slowly stirring from 40 to 23°C. The high melting point fraction, mainly comprising trisaturated fatty acid triglycerides as the main component, thus precipitated was filtered (yield of the precipitate: 18 % based on the ester-exchanged oil). After distilling off the solvent from the resulting filtrate in a conventional method, the residue was dissolved in 5 ml of acetone per gram of the residue. Then the solution was cooled under slowly stirring from 30 to 6°C and the target fraction thus precipitated was collected.

After distilling off the solvent, this fraction was deodorized in a conventional method to thereby give a mixed fatty acid triglyceride (TG1).

Sample 2:

(Preparation of mixed fatty acid triglyceride (TG2))

A mixed oil comprising 50 % of extra-hydrogenated high erucic rapeseed oil (fatty acid composition = palmitic acid: 4.0 %; stearic acid: 41.6 %; arachic acid: 5.8 %; behenic acid: 47.2 %) and 50 % of safflower oil (fatty acid composition: palmitic acid 6.8 %, stearic acid 2.4 %, oleic acid 13.3 %, linoleic acid 76.6 %) was subjected to an ester-exchange reaction by the same method as the one described above. The ester-exchanged oil thus obtained was dissolved in 4 ml of n-hexane per gram of the oil and cooled under slowly stirring from 40 to 25°C. The high melting point fraction, mainly comprising trisaturated fatty acid triglyceride, thus precipitated was filtered (yield of the precipitate: 25 % based on the ester-exchanged oil). After distilling off the solvent from the resulting filtrate in a conventional method, the residue was dissolved in 5 ml of acetone per gram of the residue. Then the solution was cooled under slowly stirring from 30 to 6°C and the target fraction thus precipitated was collected.

After distilling off the solvent, this fraction was deodorized in a conventional method to thereby give a mixed fatty acid triglyceride (TG2).

Sample 3:

(Preparation of mixed fatty acid triglyceride (TG3))

A mixed oil comprising 40 % of olive oil (fatty acid composition = palmitic acid: 10.6 %; stearic acid: 3.2 %; oleic acid: 81.2 %; linoleic acid: 5.4 %), 40 % of behenic acid (fatty acid composition = stearic acid: 2.7 %; arachic acid: 10.1 %; behenic acid: 86.1 %) and 20 % of lauric acid (fatty acid composition = lauric acid: 98.3 %) was dissolved in 5 times by volume of hexane. Then a lipase originating from the genus *Rhizopus delemar* (manufactured by Tanabe Seiyaku Co., Ltd.) capable of ester-exchanging at the $\alpha$-position, which was adsorbed by 10 % (based on the raw oil) of Celite, was added at a ratio of 520 U of the lipase per g of the raw oil and thus an $\alpha$-position selective ester exchange reaction was performed at 45°C for 72 hours. Next, the reaction mixture was filtered and the hexane was distilled off. From the distillation residue thus obtained, fatty acids were removed by molecular distillation. Then the $\alpha$-position selective ester-exchanged oil free from fatty acids thus obtained was dissolved in 4 ml of n-hexane per gram of the oil and cooled under slowly stirring from 40 to 25°C. The high melting point fraction, mainly comprising trisaturated fatty acid triglyceride, thus precipitated was filtered (yield of the precipitate: 6 % based on the ester-exchanged oil). After distilling off the solvent from the resulting filtrate in a conventional method, the residue was dissolved in 5 ml of acetone per gram of the residue. Then the solution was cooled under slowly stirring from 30 to 6°C and the target fraction thus precipitated was collected.

After distilling off the solvent, this fraction was deodorized in a conventional method to thereby give a mixed fatty acid triglyceride (TG3).

Table 1 shows the fatty acid compositions of these samples 1 to 3 thus obtained (i.e., the mixed fatty acid triglycerides TG1, TG2 and TG3), while Table 2 shows the triglyceride compositions thereof determined by gas chromatography.

In Table 1, "yield" means an yield based on the ester-exchanged oil.

Regarding "fatty acid composition", a figure given in the upper row means the total fatty acid composition while the one given in the lower column means the $\beta$-position fatty acid composition of triglyceride determined in a conventional method.

**TABLE 1**

| Sample | Yield | Iodine Value | m.p. (°C) | $C_{12}$ (%) | $C_{16}$ (%) | $C_{18}$ (%) | $C_{18-1}$ (%) | $C_{18-2}$ (%) | $C_{20}$ (%) | $C_{22}$ (%) |
|---|---|---|---|---|---|---|---|---|---|---|
| TG1 | 42.0 | 41.7 | 36.2 | — | 4.8 | 2.1 | 39.8 | 3.4 | 4.9 | 44.3 |
|  |  |  |  | — | 4.8 | 2.1 | 39.8 | 3.4 | 4.9 | 44.3 |
| TG2 | 34.5 | 64.5 | 34.4 | — | 4.3 | 21.5 | 3.9 | 34.8 | 5.9 | 28.8 |
|  |  |  |  | — | 4.5 | 20.8 | 4.0 | 35.1 | 5.1 | 29.5 |
| TG3 | 54.9 | 42.5 | 33.8 | 27.6 | 2.5 | 2.0 | 41.3 | 1.5 | 3.1 | 20.4 |
|  |  |  |  | 2.7 | 1.2 | 0.3 | 83.8 | 8.7 | 0.3 | 2.0 |

In the following Table 2, $C_{42}$ to $C_{62}$ mean those comprising the components as specified below as main components wherein L represents lauric acid, P represents palmitic acid, S represents stearic acid, U represents a $C_{18}$ unsaturated fatty acid, A represents arachic acid and B represents behenic acid.

$C_{42}$: LUL

$C_{48}$: $LU_2$, LUS

$C_{50}$: PPU, LUA
$C_{52}$: PSU, LUB
$C_{54}$: $S_2U$, $SU_2$
$C_{56}$: ASU, BPU
$C_{58}$: $BU_2$, BSU, $A_2U$
$C_{60}$: BAU
$C_{62}$: $B_2U$

TABLE 2

| Sample | Triglyceride composition | | | | | | | | | Mixed fatty acid TG of the Invention (%) |
|---|---|---|---|---|---|---|---|---|---|---|
| | $C_{42}$ (%) | $C_{48}$ (%) | $C_{50}$ (%) | $C_{52}$ (%) | $C_{54}$ (%) | $C_{56}$ (%) | $C_{58}$ (%) | $C_{60}$ (%) | $C_{62}$ (%) | |
| TG1 | - | - | 0.2 | 2.5 | 4.8 | 11.8 | 36.7 | 11.9 | 30.3 | 90.7 |
| TG2 | - | - | 0.9 | 4.7 | 17.8 | 10.1 | 38.0 | 7.5 | 20.1 | 75.7 |
| TG3 | 19.8 | 1.2 | 0.3 | 34.5 | 1.6 | 6.5 | 16.3 | 5.1 | 14.4 | 76.8 |

EXAMPLE 1

An oily solution (an oily phase) and an aqueous solution (an aqueous phase) of the following compositions were prepared.

| (Oily phase) | |
|---|---|
| Hydrogenated soybean oil (m.p.: 32°C) | 20.0 % |
| Hydrogenated coconut oil (m.p.: 32°C) | 10.0 % |
| Mixed fatty acid triglyceride (TG1) | 15.0 % |
| Stearic acid monoglyceride | 0.1 % |
| Lecithin | 0.3 % |

| (Aqueous phase) | |
|---|---|
| Skim milk powder | 5.0 % |
| Sodium hexametaphosphate | 0.1 % |
| Sucrose fatty acid ester (HLB: 11) | 0.3 % |
| Water | 49.3 % |

The above liquids were mixed together by stirring to thereby give an oil-in-water type pre-emulsified product. Next, this pre-emulsified product was homogenized in a homogenizer at a temperature of 65°C under a pressure of 40 bar ($kg/cm^2$), subjected to UHT pasteurization with the use of a VTIS Pasteurizer manufactured by Alfa-Laval and then rehomogenized at a temperature of 70°C under a pressure of 20 bar ($kg/cm^2$). After the completion of the homogenization, the emulsion was cooled to 8°C and packed under sterile conditions. Thus an oil-in-water type emulsion according to the present invention was obtained.

This oil-in-water type emulsion was aged at 5°C for 72 hours and then whipped in a vertical mixer to thereby give a whipped cream. Then the whipping properties (whipping time, over-run) of the product during this whipping step were examined. Further, the whipped cream was stored at 20°C for 24 hours and then the shape retention, water-separation, appearance, flavor and texture were organoleptically evaluated. The measurement methods and evaluation methods are specified below.

9

COMPARATIVE EXAMPLE 1

An oily liquid (an oily phase) and an aqueous liquid (an aqueous phase) of the following compositions were prepared.

| (Oily phase) | |
| --- | --- |
| Hydrogenated soybean oil (m.p.: 32 °C) | 30.0 % |
| Hydrogenated coconut oil (m.p.: 32 °C) | 15.0 % |
| Stearic acid monoglyceride | 0.1 % |
| Lecithin | 0.3 % |

| (Aqueous phase) | |
| --- | --- |
| Skim milk powder | 5.0 % |
| Sodium hexametaphosphate | 0.1 % |
| Sucrose fatty acid ester (HLB: 11) | 0.3 % |
| Water | 49.3 % |

By using the above oily liquid and aqueous liquid, a comparative oil-in-water type emulsion was produced by the same method as the one employed in the above Example 1. Further, a whipped cream was prepared by the same method as the one employed in the above Example 1 and the whipping properties at the whipping step were examined. Furthermore, the whipped cream thus obtained was organoleptically evaluated in the same manner as in the above Example 1.

EXAMPLE 2

An oily liquid (an oily phase) and an aqueous liquid (an aqueous phase) of the following compositions were prepared.

| (Oily phase) | |
| --- | --- |
| Hydrogenated soybean oil (m.p.: 32 °C) | 10.0 % |
| Hydrogenated palm kernel oil (m.p.: 34 °C) | 5.0 % |
| Mixed fatty acid triglyceride (TG2) | 25.0 % |
| Stearic acid monoglyceride | 0.1 % |
| Lecithin | 0.4 % |

| (Aqueous phase) | |
| --- | --- |
| Skim milk powder | 5.0 % |
| Sodium hexametaphosphate | 0.1 % |
| Sucrose fatty acid ester (HLB: 11) | 0.3 % |
| Water | 54.1 % |

By using the above oily liquid and aqueous liquid, an oil-in-water type emulsion according to the present invention was produced by the same method as the one employed in the above Example 1. Further, a whipped cream was prepared by the same method as the one employed in the above Example 1 and the whipping properties at the whipping step were examined. Furthermore, the whipped cream thus obtained was organoleptically evaluated in the same manner as in the above Example 1.

EP 0 563 593 B1

COMPARATIVE EXAMPLE 2

An oily liquid (an oily phase) and an aqueous liquid (an aqueous phase) of the following compositions were prepared.

| (Oily phase) | |
|---|---|
| Hydrogenated soybean oil (m.p.: 32°C) | 25.0 % |
| Hydrogenated palm kernel oil (m.p.: 34°C) | 15.0 % |
| Stearic acid monoglyceride | 0.1 % |
| Lecithin | 0.4 % |

| (Aqueous phase) | |
|---|---|
| Skim milk powder | 5.0 % |
| Sodium hexametaphosphate | 0.1 % |
| Sucrose fatty acid ester (HLB: 11) | 0.3 % |
| Water | 54.1 % |

By using the above oily liquid and aqueous liquid, a comparative oil-in-water type emulsion was produced by the same method as the one employed in the above Example 1. Further, a whipped cream was prepared by the same method as the one employed in the above Example 1 and the whipping properties at the whipping step were examined. Furthermore, the whipped cream thus obtained was organoleptically evaluated in the same manner as in the above Example 1.

EXAMPLE 3

An oily liquid (an oily phase) and an aqueous liquid (an aqueous phase) of the following compositions were prepared.

| (Oily phase) | |
|---|---|
| Butter fat (m.p.: 32°C) | 15.0 % |
| Hydrogenated palm kernel oil (m.p.: 37°C) | 2.0 % |
| Mixed fatty acid triglyceride (TG3) | 18.0 % |
| Stearic acid monoglyceride | 0.1 % |
| Lecithin | 0.8 % |

| (Aqueous phase) | |
|---|---|
| Skim milk powder | 5.5 % |
| Sodium hexametaphosphate | 0.1 % |
| Sucrose fatty acid ester (HLB: 11) | 0.2 % |
| Water | 58.3 % |

By using the above oily liquid and aqueous liquid, an oil-in-water type emulsion according to the present invention was produced by the same method as the one employed in the above Example 1. Further, a whipped cream was prepared by the same method as the one employed in the above Example 1 and the whipping properties at the whipping step were examined. Furthermore, the whipped cream thus obtained was organoleptically evaluated in the same manner as in the above Example 1.

11

COMPARATIVE EXAMPLE 3

An oily liquid (an oily phase) and an aqueous liquid (an aqueous phase) of the following compositions were prepared.

| (Oily phase) | |
|---|---|
| Butter fat (m.p.: 32 °C) | 15.0 % |
| Hydrogenated palm oil (m.p.: 37 °C) | 2.0 % |
| Hydrogenated soybean oil (m.p.: 32 °C) | 12.0 % |
| Hydrogenated palm kernel oil (m.p.: 34 °C) | 6.0 % |
| Stearic acid monoglyceride | 0.1 % |
| Lecithin | 0.8 % |

| (Aqueous phase) | |
|---|---|
| Skim milk powder | 5.5 % |
| Sodium hexametaphosphate | 0.1 % |
| Sucrose fatty acid ester (HLB: 11) | 0.2 % |
| Water | 58.3 % |

By using the above oily liquid and aqueous liquid, a comparative oil-in-water type emulsion was produced by the same method as the one employed in the above Example 1. Further, a whipped cream was prepared by the same method as the one employed in the above Example 1 and the whipping properties at the whipping step were examined. Furthermore, the whipped cream thus obtained was organoleptically evaluated in the same manner as in the above Example 1.

Table 3 summarizes the results.

The measurement methods and evaluation methods employed in the following Table 3 were as follows.

(1) Viscosity of oil-in-water type emulsion:

The viscosity of the oil-in-water type emulsion was measured by using a viscotester.

(2) Whipping time:

The time required to achieve the optimum whipping condition when the oil-in-water type emulsion was whipped in 1 ℓ of water at 700 rpm using a vertical mixer was measured.

(3) Over-run (%):

The over-run of the whipped cream was calculated in the following equation.

$$\frac{\text{(weight of cream of definite volume)} - \text{(weight of whipped cream of definite volume)}}{\text{(weight of whipped cream of definite volume)}} \times 100$$

(4) Organoleptic evaluation:

The whipped cream was organoleptically evaluated in accordance with the following criterion.

12

| Item | Rank | | | | |
|------|------|------|------|------|------|
| | AA | A | AB | B | C |
| Shape retention/surface texture | very good | somewhat good | good | somewhat poor | practically unusable |
| Water separation | no separation | little separation | slight separation | serious separation | separation of water |
| Appearance | very good | somewhat good | good | dull | practically unusable |
| Flavor/texture | very good | somewhat good | good | somewhat poor | practically unusable |

TABLE 3

| | Example 1 | Comparative Example 1 | Example 2 | Comparative Example 2 | Example 3 | Comparative Example 3 |
|---|---|---|---|---|---|---|
| Amount of mixed fatty acid TG (% based on the total oil and fat) | 30.2 | – | 47.3 | – | 39.5 | – |
| Viscosity of emulsion (CP) | 50 | 90 | 70 | 110 | 70 | 120 |
| Whipping time | 4'40" | 4'20" | 5'10" | 6'30" | 7'20" | 11'50" |
| Over-run | 120 % | 105 % | 115 % | 110 % | 125 % | 110 % |
| (Results of evaluation) | | | | | | |
| Shape retention/surface texture | AA | A | AA | B | A | C |
| Water separation | AA | A | AA | AB | AA | C |
| Appearance | AA | A | AA | AB | AA | C |
| Flavor/texture | AA | B | AA | B | AA | C |

As the results given in the above Table 3 clearly show, the oil-in-water type emulsions of the present invention (Examples 1 to 3) containing mixed fatty acid triglycerides of specific compositions have relatively lower viscosities and can achieve appropriate over-run within a shorter period of time as compared with the corresponding comparative oil-in-water type emulsions (Comparative Examples 1 to 3) free from the above-mentioned mixed fatty acid triglycerides. Further, the whipped creams obtained by using the oil-in-water

14

type emulsions of the present invention are excellent not only in physicochemical properties including shape retention but also in flavor and texture.

EXAMPLE 4

An oil-in-water type emulsion powder for whipped cream according to the present invention was produced in accordance with the following composition and method.

(Composition)

| Components | Amount |
|---|---|
| Mixed fatty acid triglyceride (TG3) | 12.0 % |
| Hydrogenated palm oil (m.p.: 37°C) | 2.0 % |
| Butter fat (m.p.: 32°C) | 16.0 % |
| Stearic acid monoglyceride | 0.2 % |
| Cow's milk | 61.8 % |
| Sodium casein | 2.0 % |
| Lactose | 6.0 % |

(Method)

Cow's milk was heated to 70°C and sodium casein and lactose were added thereto to thereby give an aqueous solution. Next, an oily liquid which had been prepared by melting and mixing fats (mixed fatty acid triglyceride TG3, hydrogenated palm oil and butter fat) and the emulsifiers by heating to 70°C, was added thereto, followed by performing pre-emulsification. Then the pre-emulsified product thus obtained was pasteurized and homogenized to thereby give an oil-in-water type emulsion. This emulsion was spray-dried at a hot-air temperature of 115°C and at an exhaust gas temperature of 65°C to thereby give a cream powder of a moisture content of 2 % or below.

To 100 parts by weight of the powdery cream thus obtained were added 20 parts by weight of sucrose and 100 parts by weight of water. The mixture was then stirred with a hand mixer and thus a whipped cream according to the present invention was produced. The whipped cream thus obtained was organoleptically evaluated in the same manner as the one described in the above Example 1. As a result, this product was excellent in shape retention and surface texture and had a good flavor and a good texture.

The oil-in-water type emulsion for whipped cream of the present invention has a high stability as an emulsion per se. In addition, it is almost satisfactory in the physicochemical properties required for when formulated into a whipped cream (whipping properties, shape retention, water-separation resistance) as well as in flavor and texture which are basic characteristics of a whipped cream. In particular, the whipped cream obtained therefrom scarcely suffers from any change in texture due to temperature change and has a good shape retention. Therefore, it is highly applicable to, for example, filling, topping and sandwiching.

**Claims**

1. An oil-in-water type emulsion for whipped cream comprising fats and oils, an emulsifier and a milk protein, wherein said fats and oils contain from 5 to 70 % by weight, based on the total amount of fats and oils, of a mixed fatty acid triglyceride containing at least one saturated fatty acid residue with 20 to 24 carbon atoms and at least one unsaturated fatty acid residue with 18 carbon atoms per molecule as constituting fatty acids.

2. An oil-in-water type emulsion for whipped cream according to claim 1 comprising fats and oils, an emulsifier, a sugar and a milk protein, wherein said fats and oils contain from 5 to 70 % by weight, based on the total amount of fats and oils,
   of a mixed fatty acid triglyceride containing at least one saturated fatty acid residue with 20 to 24 carbon atoms and at least one unsaturated fatty acid residue with 18 carbon atoms per molecule as constituting fatty acids.

15

3. A powder prepared by drying an oil-in-water type emulsion for whipped cream of claim 1 or 2.

4. A whipped cream prepared by whipping an oil-in-water type emulsion for whipped cream of claim 1 or 2.

**Patentansprüche**

1. Emulsion des "Öl-in-Wasser"-Typs für Schlagsahne, die Fette und Öle, einen Emulgator und Milchprotein enthält, wobei diese Fette und Öle 5 bis 70 Gew.-%, bezogen auf die Gesamtmenge der Fette und Öle, Triglycerid mit gemischten Fettsäuren, das pro Molekül mindestens einen gesättigten Fettsäure-Rest mit 20 bis 24 Kohlenstoffatomen und mindestens einen ungesättigten Fettsäure-Rest mit 18 Kohlenstoffatomen als Fettsäure-Komponenten aufweist, enthalten.

2. Emulsion des "Öl-in-Wasser"-Typs für Schlagsahne nach Anspruch 1, die Fette und Öle, einen Emulgator, Zucker und Milchprotein enthält, wobei die Fette und Öle 5 bis 70 Gew.-%, bezogen auf die Gesamtmenge der Fette und Öle, Triglycerid mit gemischten Fettsäuren, das pro Molekül mindestens einen gesättigten Fettsäure-Rest mit 20 bis 24 Kohlenstoffatomen und mindestens einen ungesättigten Fettsäure-Rest mit 18 Kohlenstoffatomen als Fettsäure-Komponenten aufweist, enthalten.

3. Pulver, das durch Trocknung einer Emulsion des "Öl-in-Wasser"-Typs für Schlagsahne nach Anspruch 1 oder 2 hergestellt wird.

4. Schlagsahne, die durch Schlagen einer Emulsion des "Öl-in-Wasser"-Typs für Schlagsahne nach Anspruch 1 oder 2 hergestellt wird.

**Revendications**

1. Emulsion de type huile-dans-eau destinée à la crème fouettée, comprenant des graisses et huiles, un émulsifiant et une protéine de lait, dans laquelle lesdites graisses et huiles contiennent de 5 à 70 % en masse, par rapport à la quantité totale des graisses et huiles, d'un triglycéride mixte d'acides bas contenant au moins un résidu d'acide gras saturé en $C_{20}$-$C_{24}$ et au moins un résidu d'acide gras insaturé en $C_{18}$ par molécule en tant qu'acides gras de constitution.

2. Emulsion de type huile-dans-eau destinée à la crème fouettée selon la revendication 1, comprenant des graisses et huiles, un émulsifiant, un sucre et une protéine de lait, dans laquelle lesdites graisses et huiles contiennent de 5 à 70 % en masse, par rapport à la quantité totale des graisses et huiles, d'un triglycéride mixte d'acides gras contenant au moins un résidu d'acide gras saturé en $C_{20}$-$C_{24}$ et au moins un résidu d'acide gras insaturé en $C_{18}$ par molécule en tant qu'acides gras de constitution.

3. Poudre préparée par séchage d'une émulsion de type huile-dans-eau destinée à la crème fouettée de la revendication 1 ou 2.

4. Crème fouettée préparée par fouettage d'une émulsion de type huile-dans-eau destinée à la crème fouettée de la revendication 1 ou 2.